Europäisches Patentamt

European Patent Office

Office européen des brevets

(11) Publication number: **0 454 025 A1**

# EUROPEAN PATENT APPLICATION

(21) Application number: 91106437.6

(22) Date of filing: 22.04.91

(51) Int. Cl.⁵: **C08K 9/10, B60C 11/14**

(30) Priority: 24.04.90 IT 2011690

(43) Date of publication of application:
**30.10.91 Bulletin 91/44**

(84) Designated Contracting States:
**DE FR GB SE**

(71) Applicant: **PIRELLI COORDINAMENTO
PNEUMATICI Società per Azioni
Piazzale Cadorna, 5
I-20123 Milan(IT)**

(72) Inventor: **Borgonovo, Pierluigi
Via Ornato, 105
Milan(IT)**
Inventor: **Ghilardi, Giuliano
Viale Marelli, 19
Sesto S. Giovanni (MI)(IT)**

(74) Representative: **Guella, Paolo et al
Pirelli S.p.A., Piazzale Cadorna, 5
I-20123 Milan(IT)**

(54) **Process for the manufacture of conglomerates of mix and anti-skid granules for tire treads.**

(57) Process for manufacturing strips of a conglomerate of a mix and anti-skid granules suitable for the formation of a tread strip for tires with improved characteristics of adherence to road surfaces covered with ice or snow.

The individual granules, already pre-treated with adhesive, are coated with uncured mix until a thickness of the rubber coat is reached that is not lower than 0.2 millimeters. the coated granules are then poured into a mixer for incorporation in the mix of the tire tread, after the formation of a so-called bench and the attainment of a temperature of at least 60° C but not, above 80° C.

The mixing operation is then continued until a mix is obtained with a uniform distribution of the granules. The mix is then extruded or profiled as a continuous strip suitable for constituting a tire tread or for being inserted into the cavity of a tread profile together with which it will subsequently be cured.

EP 0 454 025 A1

The present invention relates to a process for the manufacture of a conglomerate material for vehicle tire treads comprising a mix and granules of hard material with an anti-skid properties.

It has been proposed to incorporate in treads for vehicle tires granules of hard material, for example ceramic material, which become exposed and eventually wear off from the tire tread but during use allow for a substantial improvement in adhesion to road beds and surfaces, in particular if the surface is in ice or snow.

According to a known process as disclosed in published PCT application WO8906670 of 27 July 1989, the permanent incorporation of anti-skid granules, say of the ceramic type, in the treads of tires and such like, involves coating the granules with a first coating material or "primer" and then with a second coating material or "cover coat", and the subsequent incorporation of the granules treated in this way into a mix of uncured natural or synthetic rubber, or synthetic resins, already containing all the ingredients necessary for its curing or reticulation; there then follows the formation and curing of the tires with traditional methods.

The aim of these coatings on the granules is to allow stable adhesion of the granules to the rubber, avoiding their loss, when they become exposed on the tread, following the stresses to which the tire is subjected.

The coating thus obtained is suitable for ensuring a solid adhesion of the granules to the tread mix during curing. In particular, the primer makes it possible to have the granules adhere to the coating of cover coat which, in turn, is firmly fastened to the mix, so that any forced removal of the granules from the tread practically always also implies the removal of the surrounding rubber. These coatings have in any event a limited thickness, only the order of a few tens of a micron is needed. It is also prudent to limit the thickness in view of the high cost of the coating products.

The introduction and distribution of the granules in the mix, generally already containing the ingredients necessary for the curing operation, is normally carried out in mixers formed by two cylinders rotating at different speeds, between which the mix and the granules are fed, with the formation of a so-called "bench", that is, of a mass of processed and partly homogenized material, suitable for subsequent operations.

The mix is then subjected to further processes in machines of a known type, such as calenders having cylinders rotating at the same speed, or in profiles, extruders and such like, at the outlet from which a semi-finished product is obtained, incorporating the uniformly distributed granules, suitable for the formation of a tread strip according to the known art.

The granules used for this purpose are granules of materials having a high hardness, for example, in particular corundum or in general carbides, nitrides, oxides and their mixtures, in the form of elements whose maximum size is of the order of a few millimeters.

A problem encountered in the manufacture of these semi-finished products, and in general in incorporating and uniformly distributing the anti-skid granules in the mix to be cured, is the rapid degradation, due to abrasion of the mechanical elements, of the machines which process the mixes containing the granules, both in the steps of incorporation and in the subsequent one of formation.

In particular, the cylinders of the mixers and of the calenders are soon scored even if the free distance or space between them is greater than the maximum linear dimensions of the granules. This scoring is important especially in the first stage of the process, that is, in the mixer, wherein the granules tend to squeeze in between the mix and the metal cylinders, causing their abrasion due to the pressure and the slippage due to the different rotation speed of the mixer's cylinders.

Further abrasion also occurs, for example, at the side bevels of the extruder ports when the granules come into contact with the walls of the port.

The object of the present invention is to eliminate the drawback illustrated above, so as to avoid or at least reduce to negligible levels, the degradation to which tire making machinery is subjected when it is used in the manufacture of the above-mentioned type of tread.

This object is attained by means of the invention which consists of a process for the manufacture of conglomerates of mix and anti-skid granules for tread strips in tires, characterized in that it involves the following steps: - coating the granules with a layer of uncured mix, the granules preferably already being coated with adhesive material; - feeding a mixer with a mix suitable for the formation of a tire tread, up to the formation of the bench and until a temperature having a pre-set value has been reached; - adding the coated granules to the above bench and continuing the mixing operation until a uniform distribution of the granules has been attained inside the mix; and - forming a continuous strip of mix incorporating the granules, suitable for use as a tread strip or part of it in a tire, on whose carcass said strip shall subsequently be assembled before its formation and curing.

The third coating of the "mix" is thicker and more resilient than the adhesive material ("primer" and "cover coat") of the prior art and thus avoids the rough edges of the granules scoring the machinery.

Moreover, preferably, the process according to the invention provides for the distance between the mixer's cylinders to be at least twice that of the maximum linear dimension of the treated and coated granules.

According to a preferred embodiment of the process of the invention, the coating of the granules is obtained by means of successive immersions or sprayings, that is, with a treatment defined of the onion-type, in or with a mix solution, with intermediate drying stages, preferably in a current of hot-air, and treatment with a powdered material, compatible with the mix, to eliminate the granules' tackiness, until the desired coating thickness is attained.

The invention also consists of a tire, or more in general in a vehicle wheel provided with a tire, having a tread incorporating anti-skid granules obtained with such a process. The process according to the invention shall now be described with reference to some preferred, but not limiting, embodiments.

The granules to be incorporated are preferably pre-treated in a known way with the application of adhesive coatings, for example, the product known as CHEMOSIL 211 for the "primer", and CHEMOSIL 221 for the "cover coat", both specific products of the Henkel company.

These coatings are, for example, applied by immersing the granules in corresponding baths and subsequently drying them. The granules treated in this way are then coated with a sufficiently thick layer of uncured mix, identical with or compatible with that of the tread strip, until a coating thickness of at least 0.2 mm is obtained. The starting granules usually have a uniform shape, that is cylindrical or prismatic, or a non-uniform but essentially rounded shape, with values of the maximum linear dimensions ranging from 0.8 to 4 mm. According to a currently preferred embodiment, the coating of the granules is carried out in a treatment station as follows.

The granules, for example, of corundum, already treated with adhesion agents such as CHEMOSIL or similar products, are placed in a sieve having a number of meshes per cm$^2$ such as not to allow the passage of the smallest of them.

The sieve is kept in constant motion and at the same time it is subjected to a rainfall of the solution of the gumming mix suitably diluted with an appropriate solvent, for example, 90 parts by weight of heptane and 10 parts by weight of mix. It is of course also possible to use other solvents with similar characteristics, such as toluene. Preferably, the sieve is treated with a permanent or semi-permanent anti-adhesive, for example, cured silicone paints to avoid its attack on the part of the solution.

The excess solution is recovered in a tank below the sieve and recycled.

Drying as well as evaporation of the solvent is carried out, say, by having a current of hot air at about 50°C pass over the sieve.

After the evaporation of the solvent the granules are subjected to a rainfall of anti-adhesive material, for example, amorphous silica, to eliminate its tackiness and the consequent risks of packing during subsequent handling operations. The anti-adhesive material must be compatible with the subsequent curing process and during these operations the sieve containing the granules is still kept substantially constantly in motion.

The excess silica is also recovered in an appropriate container below the sieve and then recycled. A suitable silica material is, for example, the product known as ULTRASIL VN3 of the Degussa company. As an alternative the anti-adhesive treatment can be carried out with a liquid anti-adhesive, again with recovery and recycling of the excess amounts.

To avoid even a partial clogging of the sieve's meshes, it is possible, in the proximity of the treatment station, to provide for a device for rinsing the sieve, e.g. comprising a tank for immersion of the sieve into a solvent with a system of rotating brushes to remove solid residues.

As an alternative, the coating process can be carried out continuously by using sieving and vibrating mobile belts and by spraying the solution, by drying with conveyed hot air, and by executing an anti-adhesive treatment in contiguous stations.

The treatments illustrated above are repeated until the desired adhesive or coating thickness is attained, measured on the dry granule, which is preferably at least 0.2 mm.

The granules treated in this way are then incorporated in the mix which will form the tread, or possibly the strip of semi-finished product which will be placed on the tread profile according to the known art of tire manufacture. Such mix can be of natural or synthetic rubber, or of a synthetic resin of the epoxy, polyurethane or similar types, already incorporating all the ingredients necessary for the curing and/or reticulation operations.

Initially the cylinder mixer is fed with a tread mix until the so-called bench is formed, that is, a mass of mix that is plastic and homogeneous, processing it until a sufficient temperature of the bench is reached, say, 60°C, and in any event not higher than 80°C.

The granules previously coated with mix are then added to the compound by feeding them into the bench, preferably in a continuous and progressive way until the desired volumetric concentration is reached, ranging from 8% to 15%, and the mixing operation is continued until the required homogeneousness of the distribution is attained. As the process continues, the majority of the granules is absorbed, or incorporated, in the mass of the mix, further reducing the risk of cylinder abrasion.

The distance between the cylinders of the mixer must be greater than the diameter, or, more in general, than the maximum linear dimension of the coated granules. Indicatively, in the first processing stage carried out in the mixer, and with the currently foreseen dimensions of the granules, the distance between the cylinders shall have to range from 5 to 10 mm. It shall, however, be possible to adopt lower values for the cylinders of a calender, in view both of the same speed of rotation of the cylinders, and of the by now comparatively uniform distribution of the granules in the mix when this is fed to the calender.

It has, in any event, been observed that it is preferable to maintain a ratio of at least 1:2 between the dimension of the coated granules and the distance between the cylinders. This allows a reduction of the risk of compressing several granules between the cylinders, as their average volumetric density in the mix increases.

From the mix incorporating the granules strips are formed by means of calenders, extruders or profiles, having appropriate shapes and dimensions, suitable for constituting the above tread strip or, as an alternative, to be inserted in a tread extrusion or profile provided with a cavity suitable for receiving such strips continuously, and along its length.

The width of the portion of tread containing the above granules can be limited to the area in contact with the ground that is considered sufficient to obtain the required performance. For example, such width can be of the order of about half of the tread strip as in the case of tires wherein the tread is divided into two contiguous side-by-side portions, having a different elastomeric composition and different tread design, only one of which is provided with the above granules, with the object of providing a high performance under all conditions of use.

It is also possible to obtain a strip of conglomerate having a thickness less than that recommended, for example for composite structures, by means of calendering, profiling or extruding the mix incorporating the granules fed directly from the mixer. It has in fact been observed that, once the mix has been homogenized, there is no longer any danger of abrasive rubbing between granules and exposed metal parts of the above-mentioned machines, as long as, for the transversal profiles of the semi-finished products, minimum angles and thicknesses compatible with the dimensions of the granules are greater.

Claims

1. Process for the manufacture of conglomerates of mix and anti-skid granules for tread strips of tires, characterized in that it involves the following steps:
   - coating granules with a layer of uncured mix;
   - feeding a mixer with a mix suitable for the formation of a tire tread,
   mixing said mix up to the formation of the bench and until a temperature having a pre-set value has been reached;
   - adding the coated granules to the above bench and continuing the mixing operation until a uniform distribution of the granules has been attained inside the mix;
   - forming a continuous strip of mix incorporating the granules, suitable for use as at least part of a tread strip in a tire.

2. Process according to claim 1, characterized in that said pre-set temperature is not below 60° C.

3. Process according to claim 1, characterized in that the temperature of said bench, during said mixing stage, is not above 80° C.

4. Process according to claim 1, characterized by using a mixer having at least two cylinders with the distance between the cylinders of the mixer being equal to at least twice the maximum linear dimension of the largest of the coated granules.

5. Process according to claim 1, characterized in that the thickness of said coating on said granules is at least 0.2 millimeters.

6. Process according to claim 1, characterized by carrying out said coating with successive applications of a mix solution, alternating with intermediate drying stages for the evaporation of solvent between applications, thus constituting anti-adhesion stages to eliminate the granules' tackiness and the risk of packing during the subsequent handling operations, until the desired coating thickness is attained.

7. Process according to claim 6, characterized in that said applications are carried out with successive baths in said mix solution.

8. Process according to claim 6, characterized in that said applications are carried out with successive sprayings of said mix solution.

9. Process according to claim 7, characterized by recovering and recycling excess amounts of said mix solution.

10. Process according to claim 8, characterized by placing the granules in a sieve during the application of the solution and keeping said sieve substantially constantly in motion.

11. Process according to claim 10, characterized by initially treating said sieve with a permanent or semi-permanent anti-adhesive.

12. Process according to claim 6, characterized by executing said drying stages by conveying hot air over said granules.

13. Process according to claim 6, characterized by carrying out said anti-adhesion stages, executed after the evaporation of the solvent, by subjecting the granules to a rainfall of anti-adhesive material.

14. Process according to claim 13, characterized in that said anti-adhesive material is amorphous silica.

15. Process according to claim 13, characterized by recovering and recycling the excess amounts of said anti-adhesive material.

16. Process according to claim 8, characterized in that said applications of solution are carried out continuously by using sieving and vibrating mobile belts and by spraying the solution, by drying, and by executing an anti-adhesive treatment in contiguous stations.

17. Process according to claim 1, characterized by adding said granules in a progressive and continuous manner until the desired volumetric concentration in the mix is reached.

18. Process according to claim 17, characterized in that the value of said volumetric concentration ranges from 8% to 15%.

19. Process according to claim 1, characterized in that said mix is a mix of natural or synthetic rubber, or of a synthetic resin of the epoxy or polyurethane type.

20. Process according to claim 1, characterized in that said mix for the formation of the tread, fed to the mixer, already contains all the ingredients necessary for the subsequent curing and/or reticulation operations.

21. Process according to claim 1, characterized in that said granules are of a material selected from the group consisting essentially of corundum, metal carbides, nitrides, oxides and their mixtures.

22. Process according to claim 1, characterized in that the maximum linear dimension of said granules ranges from 0.8 to 4 mm.

23. Process according to claim 1, characterized in that a preliminary treatment of the granules with adhesive material comprises the application of at least one layer of primer coat and at least one layer of cover coat.

24. Process according to claim 1, characterized in that the granules are coated, in a previous step, with an adhesive material, prior to coating with the uncured mix.

25. A tire for a vehicle wheel having a tread characterized by incorporating anti-skid granules obtained by the process according to claim 1.

Europäisches
Patentamt

**EUROPÄISCHER RECHERCHENBERICHT**

Nummer der Anmeldung

EP 91106437.6

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| D,A | WO - A1 - 89/06 670 (KERATEK S.R.L.) * Totality * -- | 1-25 | C 08 K 9/10 B 60 C 11/14 |
| A | EP - A2 - 0 163 003 (HOECHST AG) * Page 3, line 16-27; page 5, line 22 - page 6, line 13; claims * ---- | 1-25 | |
| | | | **RECHERCHIERTE SACHGEBIETE (Int. Cl.⁵)** C 08 K C 08 J B 60 C |

Der vorliegende Recherchenbericht wurde für alle Patentansprüche erstellt.

| Recherchenort | Abschlußdatum der Recherche | Prüfer |
|---|---|---|
| VIENNA | 28-06-1991 | TENGLER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82